# EUROPEAN PATENT APPLICATION

(11) **EP 4 632 628 A1**
(43) Date of publication of application: **15.10.2025**
(21) Application number: 24382362.2
(22) Date of filing: 09.04.2024
(51) Int. Cl.: G06K 19/00

(54) **METHOD FOR OBTAINING AND/OR USING A CURRENT STATUS OF A DIGITAL SIGNAL PIN OF AN INTEGRATED CIRCUIT AND CORRESPONDING INTEGRATED CIRCUIT**

(71) Applicant: Giesecke+Devrient Mobile Security Germany GmbH, 81677 München (DE)
(72) Inventor: Gomez, Xavier, Munich (DE); Rodriguez, Sergi, Munich (DE)
(74) Representative: LKGLOBAL Lorenz & Kopf Patentanwalt Attorney at Law PartG mbB

(57) **Abstract**

Disclosed herein is a method (100) for obtaining and/or using a current status of a digital signal pin (11) of an integrated circuit (10). The method (100) comprises sending (103), by a software object (14) installed within the integrated circuit (10), a request for a current status of at least one digital signal pin (11) of the integrated circuit (10) to an operating system (13) of the integrated circuit (10). The method further comprises returning (104), by the operating system (13), the current status of the at least one digital signal pin (11) requested by the software object (14) to the software object (14), and performing (105), by the software object (14), an action based on the current status of the obtained at least one digital signal pin (11). Further, an integrated circuit (10), which may (for example) be a smart card such as a payment card or an electronic identification card, is disclosed. The integrated circuit (10) comprises at least one digital signal pin (11) (such as a GPIO pin), a software object (14) (such as an applet), and an operating system (13). The integrated circuit (10) is configured for carrying out the disclosed method (100).

## Description

### Technical Field

The present disclosure relates to a method for obtaining and/or using a current signal of a digital signal pin (e.g., a GPIO pin) of an integrated circuit and to a corresponding integrated circuit.

### Technical Background

Various integrated circuits such as embedded devices or systems (for example card-like data carriers such as smart cards or payment cards or embedded secure elements) comprise digital signal pins such as general-purpose input/output (GPIO) pins. In general, GPIO pins or other digital signal pins exhibit a logical status (high/low). In particular in devices such as smart cards, these GPIO pins are internal pins of the smart card that are not physically accessible from the outside of the card. However, a current status of the GPIO pins may be useful in some instances, for example for manipulation detection or to automatically perform actions within the integrated circuit.

For example, a programmed and unmanipulated smart card may exhibit a specific pattern of statuses of the GPIO pins. This pattern may change if the programming of the smart card is manipulated. Individual GPIO pins may, e.g., change from low to high or vice versa if the smart card is manipulated. By providing the desired (unmanipulated) pattern of the statuses of the GPIO pins to a readout device (e.g., a smart card reader), the readout device could detect such manipulations if it were somehow capable of obtaining the current status of the GPIO pins.

However, presently, the current status of the GPIO pins cannot be assessed in a standardized way via an Application Protocol Data Unit (APDU) and therefore cannot be easily obtained by a readout device such as a card reader. The current status of a specific GPIO pin can further be obtained by measuring the relevant pin externally, e.g., by using an oscilloscope However, because the GPIO pins are not physically accessible from the outside, this in particular excludes checks of the current status of the GPIO pins on the customer side. Also, because of the lack of the possibility for checking the current status of the GPIO pins in a standardized way via an APDU, and with it the lack of the ability of readout devices such as card readers for smart cards to get the current status of the GPIO pins, the current status of the GPIO pins cannot be used for the detection of manipulations of the smart card because an undesired change in the status of the GPIO pins cannot be detected by the card reader. Further, the current status of the GPIO pins cannot be used by the readout device to automatically trigger other actions.

### Description

Accordingly, it is an objective to provide a method for obtaining and/or using a current status of digital data pins of an integrated circuit in a standardized way without the need to physically measure the digital data pins.

This objective is solved by the subject-matter of the independent claims. Further embodiments are described in the dependent claims as well as in the following description.

Herein, a method for obtaining and/or using a current status of a digital signal pin of an integrated circuit and a corresponding integrated circuit is disclosed. Features described with regard to the method are equally valid for the device (integrated circuit) and vice versa.

The method and integrated circuit disclosed herein in particular allow to obtain the current status of a digital data pin, such as a GPIO pin, of an integrated circuit internally within the integrated circuit and also via a readout device or other device external to the integrated circuit, without having to have physical access to the corresponding digital signal pin. The method may, for example, be useful for fraud/manipulation detection or to automatically trigger actions based on a current status of a digital signal pin of an integrated circuit.

According to a first aspect, a method for obtaining and/or using a current status of a digital signal pin of an integrated circuit is provided. The method comprises sending, by a software object installed within the integrated circuit, a request for a current status of at least one digital signal pin of the integrated circuit to an operating system of the integrated circuit. The method further comprises returning, by the operating system, the current status of the at least one digital signal pin requested by the software object to the software object, and performing, by the software object, an action based on the current status of the obtained at least one digital signal pin.

The method may for example be used with a smart card or any other embedded system or generally any integrated circuit comprising digital signal pins. The digital signal pins may be any kind of digital signal pins that carry a digital signal (e.g., binary signal having the possible states high or low). For example, the digital signal pins may be used as input or output pins or both and, in general, are controllable by software, in particular by the operating system of the integrated circuit.

In some applications, however, the state of a digital signal pin may also be preset during manufacturing of the integrated circuit. For example, in smart cards or similar applications, individual ones of the digitals signal pins may have a preset defined state (high or low). If, for example, in such instances an operating system of the integrated circuit has been tampered with (e.g., by manipulating, exchanging, or otherwise tampering with the operating system or any other data within the integrated circuit), these preset defined states of the digital signal pins may change. Detection of such changes may therefore, for example, be useful for the detection of such manipulations.

Another example where detection of the current status of at digital signal pin may be useful would be quality checks for checking if the integrated circuit has been correctly manufactured. For example, by getting the status of individual digital signal pins of the integrated circuit and comparing it with a desired or nominal status of the corresponding pin, quality issues may be detected if deviations of the current status to the nominal status are detected.

A further use case where it would be useful to obtain the current status of the digital signal pins would be, for example, to check, if the integrated circuit has been correctly set to an enabling condition for some specific action before allowing the specific action. If, e.g., a reset of the integrated circuit or any other action is to be performed, it may be necessary to first bring the integrated circuit into a specific enabling condition before performing the reset. For example, some actions may only be allowed if the integrated circuit has been personalized before performing the action (such as a reset or any other action). This specific enabling condition may be associated with specific statuses of the digital signal pins, such that checking the current status of the digital signal pins allows to check, whether the corresponding enabling condition is fulfilled.

Further, a specific use case is conceivable, where the integrated circuit is an embedded system that carries some personalization keys. During storing of the keys within the embedded system, usually the operating system, a bootloader, or other software components within the embedded system should not be modified. If such software components of the embedded system nevertheless would have been modified/manipulated during storing of the keys, this modification/manipulation could be detected because the statuses of the digital signal pins would deviate from the statuses set during manufacturing of the embedded system. Therefore, if by checking the current statuses of the digital signal pins and comparing them with the desired nominal values set during manufacturing such a manipulation is detected, the corresponding keys would be rejected (for example, an ID card carrying such keys could not be used for authentication of a user).

However, these are just some specific examples. In principle, the disclosed method may be useful for any application where checking of current statuses of the digital signal pins is advantageous, be it internally within the integrated circuit itself or externally by communicating the current status to an external device in communication with the integrated circuit (such as a smart card reader). For example, a scenario is conceivable, where the status of a digital signal pin depends on the current temperature, such that a status of a digital signal pin is raised from low to high when the temperature reaches a certain threshold. By obtaining the current status of the digital signal pins, a temperature sensor may be implemented. However, any other suitable application is conceivable. In particular, the disclosed method allows for obtaining the current status of digital signal pins purely on a software basis without any physical access to the digital signal pins itself.

The software object may, for example, be an applet that is installed within the integrated circuit and that is specifically configured for obtaining the current statuses of the digital signal pins. The operating system of an integrated circuit in general knows the current statuses of the digital signal pins or can obtain them. The software object therefore can request the current status of the digital signal pins from the operating system. For this, the software object sends a corresponding request to the operating system. The request specifies the specific digital signal pins of the integrated circuit for which the status is to be obtained and may specify one or more of the digital signal pins.

The operating system, in turn, returns the current status of the digital signal pins indicated in the request to the software object. The software object may then perform some specific action depending on the current status of the requested digital signal pins. For example, the software object may return the obtained status to an external device such as a readout device (for example a smart card reader), as described further below. The software object may also perform some action automatically internally within the integrated circuit. For example, the software object itself may check for an enabling condition or may determine, that keys are valid, etc., as describes herein further above. However, such checks or action may also be performed by an external device (such as a readout device, as described further below).

According to an embodiment, the method, further comprises, prior to the software object sending the request for the current status of the at least one digital signal pin, interfacing the integrated circuit with a readout device via an external interface of the integrated circuit, and requesting, by the readout device via the external interface, a status of the at least one digital signal pin of the integrated circuit from the software object. The action performed by the software object is at least one of the following: - transmitting the current status of the at least one digital signal pin to the readout device, and - automatically performing an action or process internally within the integrated circuit.

The readout device may be any device that can communicate with the integrated circuit. For example, the readout device may be a smart card reader (contact-based (e.g., via a chip element on the front of a smart card) or contactless), a smartphone having corresponding communication hardware (e.g., a near field communication interface (NFC interface)) and corresponding software installed thereon, or any other suitable device. The external interface is an interface of the integrated circuit that corresponds to the interface used by the readout device and may be contact-based (e.g., contact area of a smart card chip) or contactless (e.g., a NFC interface). In general, the term "external" as used herein refers to an element that is external to the integrated circuit or that is used to communicate with such an element.

The software object may implement an Application Programming Interface (API) for communication with the readout device which specifies a standardized protocol for communication of the readout device with the software object (such as an applet installed within the integrated circuit). For smart card applications, the API may be used via an application protocol data unit (APDU) which enables communication between the smart card reader (as the readout device) and the smart card (as the integrated circuit). The APDU then builds the external interface. The structure of such an APDU may be defined by the norm ISO/IEC 7816-4 (organization, security and commands for interchange).

If the readout device wants to obtain the status of at least one of the digital signal pins of the integrated circuit (for example for the purposes described further above, such as manipulation detection, key enabling, checking for enabling condition, etc.), it sends a corresponding request to the software object via the API using the external interface (in smart cards, for example, using the APDU).

The software object may then obtain the status of the digital signal pins specified in the request from the readout device from the operating system, as described further above.

Once the software object has obtained the requested statuses of the digital signal pins indicated in the request from the readout device, it may transmit these statuses to the readout device via the external interface (which may be contact-based or contactless) and/or perform some other action internally, as described further above. The readout device may then, for example, use the transmitted statuses for any conceivable objective (such as described above; e.g., manipulation detection, key enabling, checking for enabling condition, etc.). For example, the readout device may compare the obtained current statuses of the digital signal pins with intended statuses (such as those implemented during manufacturing of the integrated circuit or those resulting after personalization of the integrated circuit), which may, for example, be provided to the readout device by the manufacturer, issuer, etc. of the integrated circuit. The intended statuses may, for example, be provided to the readout device via a network connection such as the internet.

The readout device may then use the current statuses of the digital signal pins for any conceivable purpose.

According to a further embodiment, the method further comprises determining, by the readout device, whether the integrated circuit has been manipulated based on the obtained current status of the at least one digital signal pin.

Such a detection may be performed by comparing the obtained current statuses with intended statuses for the digital signal pins, as described below.

However, it should be noted that the manipulation detection may also be performed by the software object (e.g., applet) itself. For example, the intended statuses may be provided to the software object by the readout device (which may receive the intended statuses from the manufacturer, issuer, etc.) via the API.

Another possibility would be that the software object itself is installed within the integrated circuit in a tamper-resistant read-only memory (ROM) during manufacturing (for example in non-volatile memory (NVM) and/or in a secure element), such that the software object cannot be manipulated after manufacturing of the integrated circuit, at least not without physically replacing it. Together with the software object, the intended statuses of the digital signal pins can be stored within the ROM. This ensures, that the manipulation detection mechanism itself is not manipulated. The software object may then carry out the corresponding detection or any other checks which do not rely on outside information on its own, without having to rely on external devices and may or may not transmit the result to the readout device. For example, if the software object detects some kind of manipulation, it may not enable keys stored within the integrated circuit (such as in ID smart card applications).

According to a further embodiment, the readout device concludes that the integrated circuit has been manipulated if the current status of the at least one digital signal pin deviates from an intended status for the at least one digital signal pin.

However, if the manipulation detection is carried out by the software object itself, the software object, instead of the readout device, may conclude whether the integrated circuit has been manipulated or not.

According to a further embodiment, the integrated circuit is an embedded system.

Such an embedded system may be any conceivable embedded system, such as standalone embedded systems, real-time embedded systems, network embedded systems, and mobile embedded system.

A concrete example for such an embedded system is a smart card, for example used as ID card, payment card, etc. Other examples include SIM (subscriber identification module) cards and embedded SIM (eSIM) cards for telecommunication purposes, e.g., for phones, cars, or Internet of Things (IoT) applications (e.g., in intelligent fridges or other household appliances or in any other suitable application).

According to a further embodiment, the embedded system is a smart card. The external interface is at least one of a contact-based interface of an integrated circuit chip of the smart card and a contactless interface of the smart card.

The smart card may be any smart card, such as an ID card, a payment card, etc. In general, as used herein the term smart card covers the conventional meaning of the term but also electronic card-like data carriers in general. A contact-based interface may for example be a chip element or rather the contact area of such a chip element that is present on the front of the smart card, as is known in the art. A contactless interface may, for example, be a near field communication (NFC) interface such as the one used in dual-interface chip cards. However, the contactless interface may also use any other contactless communication technology.

According to a further embodiment, the readout device is a card reader for a smart card.

The card reader may be configured to communicate with the smart card (or any other electronic card-like data carrier) either contact-based, contactless, or both.

According to a further embodiment, the software object is an applet.

An applet is a small application that performs one specific task that runs within the scope of a dedicated widget engine or a larger program, often as a plug-in. Applets are typical examples of transient and auxiliary applications that do not monopolize the user's attention. Applets are not full-featured application programs and are intended to be easily accessible.

In particular, the applet may be configured to carry out the functions described herein above.

According to a further embodiment, the status of the at least one digital signal pin is a binary status of the corresponding digital signal pin.

Such a binary status comprises two states, 0 (low) or 1 (high), as is known in the art. In general, the status of the at least one digital signal pin is defined by a voltage that is present at the at least one digital signal pin. For example, a high state may be defined by a voltage of 5 V above ground and a low state may be defined by 0 V. However, these are just exemplary values and other voltages, the allow to clearly distinguish between high and low can be used, too.

According to a further embodiment, the binary status comprises the alternatives high or low.

According to a further embodiment, the at least one digital signal pin is a general-purpose input/output pin (GPIO pin), of the integrated circuit.

A GPIO pin is an uncommitted digital signal pin on an integrated circuit or electronic circuit board which may be used as an input or output, or both, and is controllable by software. GPIOs have no predefined purpose and are unused by default. If used, the purpose and behavior of a GPIO is defined and implemented by the designer of higher assembly-level circuitry: the circuit board designer in the case of integrated circuit GPIOs, or system integrator in the case of board-level GPIOs.

According to a second aspect, an integrated circuit is provided. The integrated circuit comprises at least one digital signal pin, a software object, and an operating system. The software object is configured for requesting a current status of the at least one digital signal pin from the operating system by sending a request for the current status of at least one digital signal pin of the integrated circuit to the operating system. The operating system is configured, in response to the request from the software object, to return the current status of the at least one digital signal pin requested by the software object to the software object. The software object is configured to perform an action based on the obtained current status of the at least one digital signal pin.

In particular, the integrated circuit is configured to carry out the method described above according to any one of the described embodiments. Corresponding explanations regarding the functional elements of the integrated circuit are immediately clear from the description of the method and will not be repeated here.

According to an embodiment, the integrated circuit further comprises an external interface configured for interfacing with a readout device and configured for transmitting a request for a current status of the at least one digital signal pin from the readout device to the software object.

The external interface may be any interface capable of establishing a communication with a readout device, such as in smart card reader in the case of a smart card as the integrated circuit. In particular, the external interface may be contact-based or contactless. Such an external interface has been described in detail further above.

According to a further embodiment, the at least one digital signal pin is a general-purpose input/output pin (GPIO pin).

According to a further embodiment, the integrated circuit is a smart card.

Such a smart card may, for example, be a smart card for identification purposes (such as an electronic ID card), a payment card (such as a credit card), or any other electronic card like data carrier.

### Brief Description of the Drawings

In the following, exemplary embodiments are described in more detail having regard to the attached figures. The illustrations are schematic and not to scale. Identical reference signs refer to identical or similar elements. However, identical or similar elements can also be designated by different reference signs. The figures show:
- **Fig. 1**: a schematic illustration of an integrated circuit according to the present disclosure that is in communication with a readout device.
- **Fig. 2**: a schematic illustration of a smart card as an example of an embedded system as the integrated circuit according to the present disclosure.
- **Fig. 3**: a flow chart of a method for obtaining and/or using a current status of a digital signal pin of an integrated circuit, such as of the integrated circuits according to Fig. 1 and 2, according to the present disclosure.

### Detailed Description

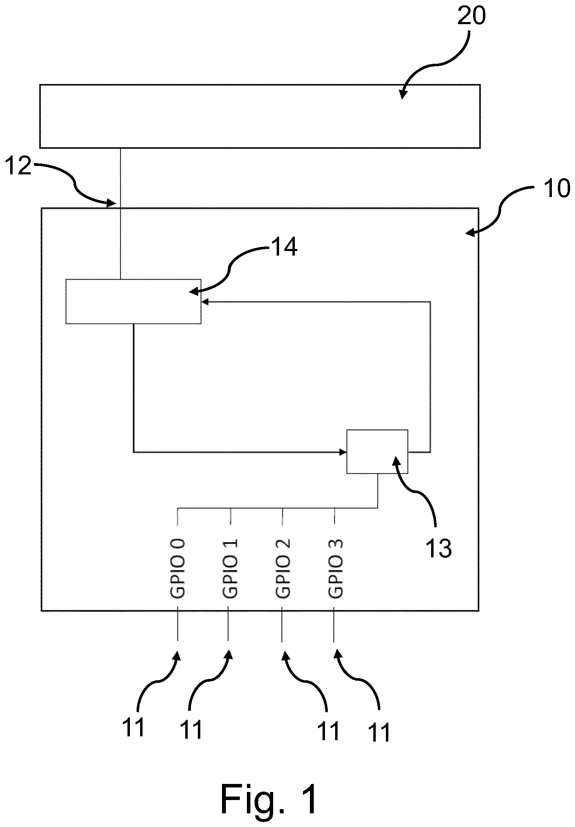

Fig. 1 shows a highly schematic representation of an integrated circuit 10 that is in communication with a readout device 20 via an external interface 12.

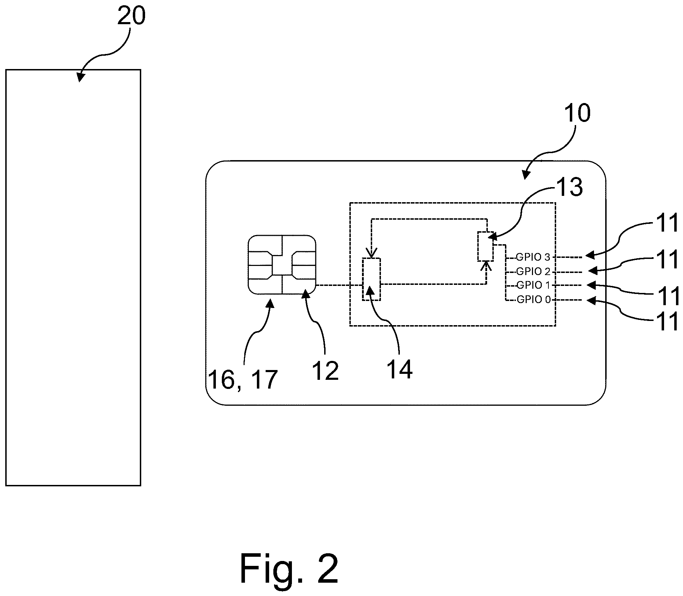

The integrated circuit 10 may be an embedded system 10, such as the smart card 10 schematically shown in Fig. 2 and described below. The integrated circuit 10 comprises an operating system 13 installed thereon. Further, the integrated circuit 10 has a software object 14 in the form of an applet 14 installed thereon. As illustrated, the embedded system 10 comprises four digital signal pins 11 in the form of general-purpose input/output pins 11 (GPIO pins 11; GPIO 0 to GPIO 3). However, it should be appreciated that the embedded system 10 may also comprise any other number of GPIO pins 11 or any other kind of digital signal pins 11.

The GPIO pins 11 and their current status are accessible by the operating system 13 but may, at least in some cases such as with the smart card 10 of Fig. 2, not be physically accessible from the outside. The operating system 13 manages the general functionality of the embedded system 10.

The GPIO pins 11 are uncommitted digital signal pins 11 on the integrated circuit 10 which may be used as an input or output, or both, and are controllable by the operating system 13. The GPIO pins 11 may have no predefined purpose. In general, GPIO pins 11 are digital (e.g., binary) pins that can in principle be in two different states, high or low. The GPIO pins 11 do have a certain intended or nominal status, i.e., each GPIO pin 11 is either in the high or the low state, which may, for example, depend on the stored contend within the memory components of the embedded system 10. For example, an embedded system 10 may comprise a certain pattern of statuses of the GPIO pins 11 after manufacturing, after personalization, etc. If, for example, the embedded system 10 is a smart card 10 carrying keys of a user for authentication, once the keys are stored within the smart card 10, the GPIO pins 11 exhibit a specific pattern.

In some instances, it may be useful to obtain the current status of the GPIO pins 11 by software without having to physically measure the GPIO pins 11. In particular, for example, in the case of a smart card 10 (Fig. 2), the GPIO pins 11 are not physically accessible from the outside but are internal parts of the smart card 10. Therefore, such GPIO pins 11 also cannot be measured by an end user. However, even if the GPIO pins 11 are accessible from the outside, it may be beneficial to obtain their status via a corresponding API on the software level, as this, for example, allows a readout device 20 or other device to directly obtain the statuses of the GPIO pins 11, which allows to automatically perform certain actions.

Obtaining the status of the GPIO pins 11 may, for example, be useful for detecting manipulations/tampering, for key authentication/enabling, checking for enabling conditions for certain operations, etc., as described herein further above. The specifics of such example situations in which knowledge of the current status of the GPIO pins 11 is useful have been described herein further above in great detail and will not be repeated here.

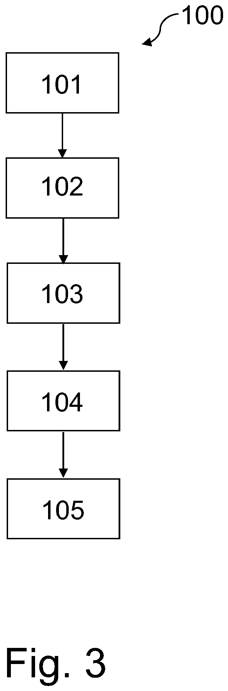

Obtaining the statuses of the GPIO pins 11 in a standardized way without having to physically measure them has not been possible in the past. The present invention provides such a means for obtaining these statuses. In particular, the applet 14 implements and Application Programming Interface (API), i.e., a standardized communication protocol, to obtain the statuses of the GPIO pins 11. The corresponding method 100 will be described with regard to Fig. 3. The integrated circuit 10 of Fig. 1 (and also the smart card 10 of Fig. 2 as an example for an integrated circuit 10 in the form of an embedded system 10) is configured to carry out the method 100.

Fig. 2 shows a smart card 10 as an example for the embedded system 10 schematically shown in Fig. 1. The illustration of the smart card 10 is substantially similar to the illustration in Fig. 1. However, Fig. 2 illustrates the external interface 12 in some more detail. In particular, here, the external interface 12 is implemented by an I/O pin of a contact area 17 of a chip element of the smart card 10 and builds a contact-based interface 16. It should be appreciated that the smart card 10 may be a dual interface chip card which additionally comprises a contactless interface (not shown in Fig. 2), as is known in the art. Further, the smart card 10 may also have no contact-based interface 16 but only a contactless interface.

The contact-based interface 16, i.e., the I/O pin of the contact area 17, allows to establish a communication between the readout device 20 (smart card reader 20) with the applet 14 installed within the smart card 10. The smart card 10 can be inserted into the smart card reader 20 to establish a communication connection with the smart card reader 20, as is known in the art and will not be described in more detail. In Fig. 2, the smart card 10 is shown immediately before inserting it into the smart card reader 20.

A contactless interface (not shown) may for example be a near field communication interface (NFC interface), which can be used to establish a contactless communication connection with the smart card reader 20. For this, the smart card and the smart card reader 20 are both equipped with corresponding coil windings (not shown) that enable inductive coupling of the smart card 10 and the smart card reader 20, as is known in the art and will not be described in more detail.

It should be appreciated that the smart card 10 (or any other integrated circuit 10 or embedded system 10) may be equipped with even more external interfaces 12 or with only one external interface 12. Further, it should be appreciated that the smart card 10 is only one example of an integrated circuit 10 in the form of an embedded system 10. The external interface 12 of the smart card 10 implements and Application Protocol Data Unit (APDU)

The GPIO pins 11 of the smart card 10 are not accessible from the outside of the smart card 10 but are rather integrated components within a card body of the smart card 10. Therefore, the GPIO pins cannot be measured manually without destroying the smart card 10.

The general discussion with regard to the integrated circuit 10 of Fig. 1 is fully valid for the exemplary smart card application of Fig. 2 and therefore will not be repeated here. Reference is made to the discussion of Fig. 1. The schematic of Fig. 1 is drawn in dashed lines in Fig. 2 to indicate, that the corresponding components are installed within the smart card 10, either on a software basis (applet 14, operating system 13) or on a hardware basis (GPIO pins 11).

Fig. 3, with continued reference to Figs. 1 and 2, shows a flow chart of a method 100 for obtaining and/or using a current status of a digital signal pin 11.

In the case of an integrated circuit 10 that has an external interface 12, the method may start with interfacing 101 the integrated circuit 10 with a readout device 20. For example, when the integrated circuit 10 is the smart card 10 of Fig. 2, interfacing 101 comprises inserting the smart card 10 into the smart card reader 20 or establishing a contactless communication with the smart card reader 20. However, this is only one example. Interfacing 101 in general comprises any establishment of a communication connection with the integrated circuit 10. The method 100 may be used with any integrated circuit 10, even with integrated circuits 10 without any external interface 12, for example to automatically perform some internal process or operation based on the statuses of the digital signal pins 11 (e.g., GPIO pins 11), as described further above. In the latter cases (i.e., no external interface 12), steps 101 and 102 are obsolete and the method 100 starts directly with step 103. Otherwise, the method 100 proceeds to step 102 after the connection via the external interface 12 is established.

In step 102, the readout device 20 (e.g., the smart card reader 20 of Fig. 2) requests the status of at least one of the digital signal pins 11 from the applet 14 (or in general any suitable software object 14). For this, the software object or applet 14 implements an Application Programming Interface (API), i.e., a standardized protocol containing a specified set of commands (e.g., a request command, etc.) for communication with the readout device 20 for the purpos of obtaining the statuses of the digital signal pins 11.

In step 103, in turn, after receiving the status request for the at least one of the digital signal pins 11, the applet 14 or other software object 14 internally sends a request for a current status of the at least one digital signal pin 11 to the operating system 13 of the integrated circuit 10.

The operating system 13, after receiving the request from the applet 14, returns the current status of the requested digital signal pin(s) 11 to the applet 14. Depending on the use case, in step 105, the applet 14 performs some action based on the obtained current status(es) of the digital signal pin(s) 11. This action may be an automated internal action or may, for example, be that the applet 14 returns the obtained current statuses via the implemented API using the external interface 12 to the readout device 20.

For example, the applet 14 could internally compare the current statuses with intended nominal statuses for the digital signal pin(s) 11 if it has stored (in a tamper resistant way) the corresponding nominal values of the digital signal pin(s) 11 or if the nominal values are provided via the external interface 12. This comparison may be used to detect manipulations of the software content of the integrated circuit 10 (e.g., falsified keys after personalization of the integrated circuit 10). Such a comparison could alternatively (or additionally) also be done by the readout device 20, after it has received the current statuses of the digital signal pin(s) 11. However, it should be appreciated that this is only one example for an action that could be performed in step 105. Further above, a multitude of beneficial applications for obtaining and using the obtained current statuses have been described. These application scenarios are referenced here.

Further, it should be appreciated that any other beneficial application scenario for obtaining and/or using the current statuses of the digital signal pins 11 is conceivable. The disclosed subject-matter is not limited to the specific examples provided herein. The application scenarios described are merely exemplary in nature for illustrating the beneficial effects of the disclosed method 100 and integrated circuit 10. A multitude of other application scenarios are conceivable.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### List of Reference Signs

- 10: integrated circuit, embedded system, smart card
- 11: digital signal pin, general-purpose input/output pin (GPIO pin)
- 12: external interface
- 13: operating system
- 14: software object, applet
- 15: integrated circuit chip (of a smart card)
- 16: contact-based interface
- 17: contact area of chip element

- 20: readout device, smart card reader

- 100: method
- 101: interfacing integrated circuit
- 102: requesting status by readout device
- 103: sending status request to the operating system
- 104: returning status by the operating system
- 105: performing action based on current status

## Claims

1. Method (100) for obtaining and/or using a current status of a digital signal pin (11) of an integrated circuit (10), the method (100) comprising:
sending (103), by a software object (14) installed within the integrated circuit (10), a request for a current status of at least one digital signal pin (11) of the integrated circuit (10) to an operating system (13) of the integrated circuit (10);
returning (104), by the operating system (13), the current status of the at least one digital signal pin (11) requested by the software object (14) to the software object (14); and
performing (105), by the software object (14), an action based on the current status of the obtained at least one digital signal pin (11).

2. Method (100) of claim 1, further comprising:
prior to the software object (14) sending (104) the request for the current status of the at least one digital signal pin (11), interfacing (101) the integrated circuit (10) with a readout device (20) via an external interface (12) of the integrated circuit (10); and
requesting (102), by the readout device (20) via the external interface (12), a status of the at least one digital signal pin (11) of the integrated circuit (10) from the software object (14);
wherein the action performed (105) by the software object (14) is at least one of:
transmitting (105) the current status of the at least one digital signal pin (11) to the readout device (20); and
automatically performing (105) an action or process internally within the integrated circuit (10).

3. Method (100) of claim 2, further comprising determining (107), by the readout device (20), whether the integrated circuit (10) has been manipulated based on the obtained current status of the at least one digital signal pin (11).

4. Method (100) of claim 3, wherein the readout device (20) concludes that the integrated circuit (10) has been manipulated if the current status of the at least one digital signal pin (11) deviates from an intended status for the at least one digital signal pin (11).

5. Method (100) of any one of the preceding claims, wherein the integrated circuit (10) is an embedded system (10).

6. Method (100) of claim 5, wherein the embedded system (10) is a smart card (10); and
wherein the external interface (12) is at least one of a contact based interface (16) of an integrated circuit chip (15) of the smart card (10) and a contactless interface (17) of the smart card (10).

7. Method (100) of any one of the preceding claims, wherein the readout device (20) is a card reader (20) for a smart card (10).

8. Method (100) of any one of the preceding claims, wherein the software object (14) is an applet (14).

9. Method (100) of any one of the preceding claims, wherein the status of the at least one digital signal pin (11) is a binary status of the corresponding digital signal pin (11).

10. Method (100) of claim 9, wherein the binary status comprises the alternatives high or low.

11. Method (100) of any one of the preceding claims, wherein the at least one digital signal pin (11) is a general-purpose input/output pin (11), GPIO pin (11), of the integrated circuit (10).

12. Integrated circuit (10) comprising:
at least one digital signal pin (11);
a software object (14); and
an operating system (13);
wherein the software object (14) is configured for requesting a current status of the at least one digital signal pin (11) from the operating system (13) by sending (103) a request for the current status of at least one digital signal pin (11) of the integrated circuit (10) to the operating system (13);
wherein the operating system (13) is configured, in response to the request from the software object (14), to return (104) the current status of the at least one digital signal pin (11) requested by the software object (14) to the software object (14); and
wherein the software object (14) is configured to perform (105) an action based on the obtained current status of the at least one digital signal pin (11).

13. Integrated circuit (10) of claim 12, further comprising an external interface (12) configured for interfacing (101) with a readout device (20) and configured for transmitting a request for a current status of the at least one digital signal pin (11) from the readout device (20) to the software object (14).

14. Integrated circuit (10) of claim 12 or 13, wherein the at least one digital signal pin (11) is a general-purpose input/output pin (11), GPIO pin (11).

15. Integrated circuit (10) of any one of claims 12 to 14, wherein the integrated circuit (10) is a smart card.
